# EUROPÄISCHE PATENTANMELDUNG

(11) **EP 0 786 750 A1**
(43) Veröffentlichungstag der Anmeldung: **30.07.1997**
(21) Anmeldenummer: 97100382.7
(22) Anmeldetag: 11.01.1997
(51) Int. Cl.: G08B 21/00

(54) **Verfahren zur Standortbestimmung von abgelegten Gegenständen und Anordnung zum Durchführen des Verfahrens**

(30) Priorität: 25.01.1996 DE 19602588
(71) Anmelder: Daimler-Benz Aerospace Aktiengesellschaft, 81663 München (DE)
(72) Erfinder: Liebelt, Helga, 89073 Ulm (DE); Seibl, Alfons, 28857-Syke-Barrien (DE)
(74) Vertreter: Fröhling, Werner, Dr.

(57) **Zusammenfassung**

Um den Standort von abgelegten Gegenständen schnell bestimmen zu können, wird erfindungsgemäß folgendes Verfahren vorgeschlagen:
a) vor ihrer Ablage werden die einzelnen Gegenstände mit einem elektronischen Datenträger versehen, in dem eine den jeweiligen Gegenstand individuell kennzeichnende Kennung abgespeichert ist;
b) in einem separaten Datenspeicher werden Informationen über die einzelnen abgelegten Gegenstände zusammen mit der jeweils zugehörigen Kennung abrufbar gespeichert;
b) zur Standortbestimmung eines der abgelegten Gegenstände wird dessen individuelle Kennung dem separaten Datenspeicher entnommen und mittels eines Funkgeräts als Suchsignal ausgesendet;
d) in den elektronischen Datenträgern, die mit dem Funkgerät in Wirkverbindung stehen, wird die von dem Funkgerät ausgesendete Kennung mit der in dem jeweiligen elektronischen Datenträger abgespeicherten Kennung verglichen;
e) nur derjenige elektronische Datenträger, bei dem die beiden Kennungen übereinstimmen, sendet den Ort des gesuchten Gegenstandes anzeigende Antwortsignale aus.

Besonders vorteilhaft ist es, wenn der elektronische Datenträger in Form eines flexiblen und in eine selbstklebende Folie integrierten Funketiketts realisiert oder in eine Büro- oder Heftklammer integriert ist.

## Beschreibung

Die Erfindung betrifft ein Verfahren zur Standortbestimmung von abgelegten Gegenständen gemäß dem Oberbegriff des Patentanspruchs 1 sowie eine Anordnung zum Durchführen des Verfahrens gemäß Oberbegriff des Patentanspruchs 8.

Verfahren bzw. Anordnungen dieser Art werden allgemein eingesetzt, um abgelegte Gegenstände ausfindig zu machen, deren Aufbewahrungsort dem Sucher nur ungefähr bekannt ist.

Bekannt sind z.B. Schlüsselsuchsysteme, bei denen ein Funketikett (Transponder) am Schlüsselbund befestigt ist, das auf ein akustisches Suchsignal des Suchers (z.B. auf einen Pfiff hin) mit einem akustischen Signal (z.B. einem Pfeifton) antwortet, sofern die durch das akustische Suchsignal übertragene Schallenergie, die den Transponder erreicht, ausreicht, um den Transponder zu aktivieren, damit dieser das akustische Antwortsignal aussendet. Der Sucher vernimmt den Pfeifton des Transponders und kann im allgemeinen die ungefähre Richtung bestimmen, aus der dieser Pfeifton gekommen ist. Er weiß dann in der Regel, in welchem Gebiet er den Schlüsselbund suchen muß. Gegebenenfalls kann er durch wiederholtes Pfeifen den Transponder dazu veranlassen, den Pfeifton solange wiederholt auszusenden, bis der Sucher den Schlüsselbund gefunden hat.

Dieses bekannte System eignet sich jedoch nur zur Lokalisierung eines Gegenstandes. Werden z.B. mehrere Gegenstände mit einem solchen Transponder versehen, die sich alle in "Rufweite" des Suchers befinden, senden natürlich auch alle von dem Suchpfiff erreichten Transponder einen Pfeifton aus. Die gezielte Suche nach einem bestimmten Gegenstand wird hierdurch sehr erschwert, da der Sucher nicht von vornherein weiß, welcher der vernommenen Pfeiftöne zu welchem Gegenstand gehört, und er deshalb im Prinzip den einzelnen Pfeiftönen nacheinander nachgehen muß, und zwar solange, bis er den von ihm gesuchten Gegenstand gefunden hat.

Ferner ist allgemein bekannt, in Warenhäusern die dort zum Verkauf angebotenen Gegenstände mit elektronischen Datenträgern (z.B. Funketiketten) unverlierbar zu versehen und an den Ein- und Ausgängen Funk-Sende/Empfangsgeräte aufzustellen, die ein akustisches Alarmsignal abgeben, sobald sie Funkkontakt zu einem der Funketiketten haben. Die Reichweite dieser Funkgeräte ist auf den Ein/Ausgangsbereich beschränkt, so daß dieser Fall nur dann eintreten kann, wenn der Gegenstand zusammen mit dem Funketikett in diesen Bereich gelangt. Das wiederum ist nur dann möglich, wenn ein Kunde das Warenhaus mit dem Gegenstand (und mit dem noch an diesem befestigten Funketikett) ohne vorherige Bezahlung verlassen will, da an den Kassen der Warenhäuser nach Entrichtung des Kaufpreises das Funketikett von dem Gegenstand entfernt wird.

Diese Systeme sind jedoch nicht geeignet, den Aufbewahrungsort eines bestimmten Gegenstands innerhalb des Warenhauses ausfindig zu machen.

Schließlich sind aus dem Bereich der Müllentsorgung (vgl. z.B. DE 42 11 119 A1) Funkerfassungs- und Identifizierungssysteme bekannt, bei denen die einzelnen Mülltonnen jeweils mit einem Transponder versehen sind, in dem spezifische Daten der Mülltonne (z.B. Angaben über den Besitzer, die entrichteten Müllgebühren, das Volumen der Mülltonne usw.) gespeichert sind, die bei der Entleerung der Mülltonne von einem Funk-Lese/Schreibgerät am Müllfahrzeug ausgelesen und zur weiteren Verarbeitung an eine Zentrale weitergeleitet werden, z.B. um je nach Zahl der Leerungen bzw. nach Müllgewicht oder -volumen individuelle Müllgebühren für die Besitzer der einzelnen Mülltonnen zu berechnen.

Ferner ist aus der DE 42 11 119 A1 bekannt, daß mit einem solchen Funk-Lese/Schreibgerät auch leerungsspezifische Daten (z.B. Datum, Uhrzeit der Leerung) in den Speicher des Transponders der entleerten Mülltonne eingeschrieben werden können, um dem Mülltonnenbesitzer die Möglichkeit zu eröffnen, die auf ihn zugeschnittene individuelle Müllgebührenrechnung anhand der in dem Transponder seiner Mülltonne gespeicherten Entleerungsdaten zu überprüfen.

Diese Zuordnung der zu entrichtenden individuellen Müllgebühren zu einer bestimmten Tonne ist nur deshalb möglich, weil die einzelnen Transponder jeweils einen Speicher aufweisen, in dem eine individuell die jeweils zugehörige Mülltonne kennzeichnende Kennung abgespeichert ist.

Die Aufgabe der Erfindung besteht einerseits darin, ein Verfahren anzugeben, mit dem es auf möglichst einfache Weise möglich ist, den Standort eines abgelegten Gegenstands zuverlässig zu bestimmen, und andererseits darin, eine Anordnung zum Durchführen des Verfahrens anzugeben, die möglichst einfach im Aufbau bzw. in der Handhabung und möglichst kostengünstig in der Herstellung ist.

Die erfindungsgemäße Lösung dieser Aufgabe in bezug auf das zu schaffende Verfahren ist durch die kennzeichnenden Merkmale des Patentanspruchs 1 wiedergegeben und in bezug auf die zu schaffende Anordnung durch die kennzeichnenden Merkmale des Patentanspruchs 8.

Die übrigen Ansprüche enthalten vorteilhafte Aus- und Weiterbildungen des erfindungsgemäßen Verfahrens (Ansprüche 2 bis 7) und der erfindungsgemäßen Anordnung (Ansprüche 9 bis 11) sowie bevorzugte Anwendungen der Erfindung (Ansprüche 12 und 13).

Um den Standort eines Gegenstandes aus einer Vielzahl von Gegenständen bestimmen zu können, sind nach der Erfindung folgende Verfahrensschritte erforderlich:
a) vor ihrer Ablage werden die einzelnen Gegenstände mit einem elektronischen Datenträger versehen, in dem eine den jeweiligen Gegenstand individuell kennzeichnende Kennung abgespeichert ist;
b) in einem separaten Datenspeicher werden Informationen über die einzelnen abgelegten Gegenstände zusammen mit der jeweils zugehörigen Kennung abrufbar gespeichert;
c) zur Standortbestimmung eines der abgelegten Gegenstände wird dessen individuelle Kennung dem separaten Datenspeicher entnommen und mittels eines Funkgeräts als Suchsignal ausgesendet;
d) in den elektronischen Datenträgern, die mit dem Funkgerät in Wirkverbindung stehen, wird die von dem Funkgerät ausgesendete Kennung mit der in dem jeweiligen elektronischen Datenträger abgespeicherten Kennung verglichen;
e) nur derjenige elektronische Datenträger, bei dem die beiden Kennungen übereinstimmen, sendet auf die Suchsignale des Funkgeräts den Ort des gesuchten Gegenstandes anzeigende Antwortsignale aus.

Besonders vorteilhaft hat sich erwiesen, wenn als Suchsignale Mikrowellen- (insbesondere Millimeterwellen-) oder Infrarotsignale ausgesendet werden, da diese Wellenlängenbereiche eine ausreichend genaue Bestimmung der Richtung zulassen, aus der die Antwortsignale des aktivierten Datenträgers kommen.

Ebenso vorteilhaft hat sich erwiesen, wenn auch die Antwortsignale des aktivierten Datenträgers im Mikrowellen-, Millimeterwellen- bzw. Infrarotbereich liegen.

Funktechnisch zweckmäßig (vor allem wegen der Entkopplung von Sende- und Empfangszweig im Funkgerät) hat es sich erwiesen, wenn Such- und Antwortsignale auf unterschiedlichen Frequenzen gesendet werden.

Denkbar ist auch, daß der aktivierte Datenträger optische und/oder akustische Antwortsignale aussendet. Diese optischen bzw. akustischen Signale können selbstverständlich auch zusätzlich zu den Mikrowellen-, Millimeterwellen- bzw. Infrarotsignalen von aktivierten Datenträgern ausgesendet werden. Dies erleichtert dem Sucher die Bestimmung der Richtung, aus der das Antwortsignal kommt.

Besonders zweckmäßig hat sich erwiesen, wenn das Funkgerät die Antwortsignale des aktivierten Transponders mit Hilfe einer Empfangsantenne mit starker Richtcharakteristik empfängt und den gemessenen Signalpegel des Antwortsignals anzeigt. Dies hat vor allem bei Hand-Funkgeräten den Vorteil, daß der Sucher zur Bestimmung der Richtung, aus der das Antwortsignal kommt, sich mit dem Handgerät nur im Kreise drehen und dabei den angezeigten Signalpegel beobachten muß, um die Einfallsrichtung des Signals bestimmen zu können. Hat er die Einfallsrichtung einmal gefunden, muß er sich mit dem Gerät solange in diese Richtung bewegen, bis er vor dem gesuchten Gegenstand steht. Dabei steigt mit der Annäherung an den gesuchten Gegenstand der vom Funkgerät angezeigte Pegel des Antwortsignals an.

Besonders vorteilhaft ist es, wenn die Kennung der einzelnen Gegenstände zusätzlich zu der individuell den einzelnen Gegenstand kennzeichnenden Kennung noch eine Gruppenkennung enthält, die für alle zu kennzeichnenden Gegenstände oder zumindest für einen Teil dieser Gegenstände gleich ist.

In geschlosssenen Räumen kann man mit Hilfe dieser Gruppenkennung und speziellen, an den Ein- und Ausgängen der Räume plazierten und nur auf die Gruppenkennung abgestimmten Sende/Empfangsgeräten ein wirksames Diebstahlsicherungssystem aufbauen, indem diese speziellen Sende/Empfangsgeräte die mit einer Gruppenkennung versehenen Datenträger aktivieren, sobald diese in ihren Wirkungsbereich (d.h. den Ein- und Ausgangsbereich der Räume) gelangen, und nach Herstellung der Wirkverbindung zwischen ihnen und dem aktivierten Datenträger ein (akustisches und/oder optisches) Alarmsignal aussenden bzw. die aktivierten Datenträger veranlassen, ein solches Alarmsignal auszusenden.

Die erfindungsgemäße Anordnung zum Durchführen des Verfahrens weist mindestens ein Funkgerät und mindestens einen elektronischen Datenträger auf, in dem eine Kennung abgespeichert ist und der an einem Gegenstand befestigt ist. Die Anordnung zeichnet sich erfindungsgemäß dadurch aus, daß der elektronische Datenträger in Form eines Funketiketts (vorzugsweise in Form eines flexiblen und in eine selbstklebende Folie integrierten Funketiketts) realisiert ist oder daß der elektronische Datenträger in eine Büro-oder Heftklammer integriert ist.

Der Vorteil dieser Datenträger-Ausführungsformen ist vor allem darin zu sehen, daß sie auf sehr einfache und kostengünstige Weise hergestellt und an den Gegenständen befestigt werden können und daß sie sehr wenig Raum beanspruchen.

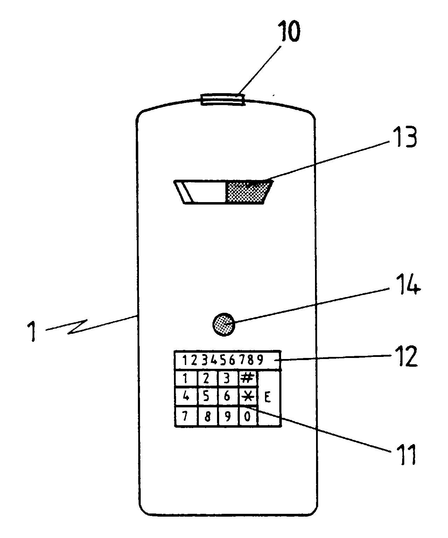

Im folgenden wird die Erfindung anhand eines bevorzugten Ausführungsbeispiels unter Bezugnahme auf die Figur näher erläutert, die eine bevorzugte Ausführungsform eines Funk-Sende/Empfangsgerät zeigt, mit dem das zuvor beschriebene Verfahren besonders komfortabel durchgeführt werden kann.

Das im folgenden geschilderte Ausführungsbeispiel stellt eine Anwendung der Erfindung auf ein Dokumentenablagesystem dar, wie es z.B. in Sekretariaten, Bibliotheken, Archiven oder sonstigen Dokumentationszentren eingesetzt werden könnte.

In diesem System werden alle zu registrierenden Dokumente vor ihrer Ablage mit einem elektronischen Datenträger versehen, der z.B. in Form einer flexiblen Funketikette in eine selbstklebende Folie eingeschweißt ist oder in eine Büro- oder Heftklammer integriert ist. In den einzelnen Funketiketten ist jeweils eine individuell das Dokument kennzeichnende Kennung gespeichert, die parallel in einer separaten Datenbank (z.B. eines PCs) ggf. zusammen mit weiteren Informationen über das jeweilige Dokument abrufbar abgespeichert wird.

Das so gekennzeichnete und in der Datenbank parallel mit seiner Kennung erfaßte Dokument wird anschließend abgelegt (z.B. in einem Ordner).

Wird nun der Standort eines so gekennzeichneten Dokuments gesucht, stellt der Sucher zunächst über den separaten Datenspeicher fest, welche Kennnung diesem Dokument zugeordnet ist. Anschließend gibt er diese Kennung über eine Eingabetastatur 11 in das (über eine Einschalttaste 14 ein- und ausschaltbare) Funkgerät 1 ein. Auf einem LCD-Display 12 erscheint die eingegebene Kennung (zur Kontrolle).

Gleichzeitig wird diese Kennung per Funksignal über den Radarsensor 10 ausgestrahlt. Die in Reichweite des Funkfeldes befindlichen Funketiketten empfangen das Signal und vergleichen die empfangene Kennung mit der in ihnen abgespeicherten Kennung. Stimmen die beiden Kennungen überein (und das kann nur bei einem Funketikett der Fall sein, sofern dieses gesuchte Funketikett sich innerhalb der Reichweite des Funkfeldes des Funkgeräts 1 befindet), sendet das zugehörige Funketikett ein Antwortsignal aus, das über die Empfangsantenne des Radarsensors 10 vom Funkgerät 1 empfangen und dessen Signalpegel am Empfangsort vom Funkgerät 1 auf einer Zeigeranzeige 13 angezeigt wird. Infolge der starken Richtwirkung der Empfangsantenne des Radarsensors 10 kann die Einfallsrichtung des Antwortsignals einfach dadurch festgestellt werden, indem der Sucher das Funkgerät 1 langsam im Raum dreht und dabei den Signalpegel auf der Zeigeranzeige 13 beobachtet.

Das Maximum dieser Anzeige zeigt die Einfallsrichtung des Antwortsignals an. Im nächsten Schritt muß er sich mit dem Funkgerät 1 in Richtung des Signaleinfalls bewegen. Tut er dies, steigt der Signalpegel mit stetiger Annäherung des Funkgeräts 1 an den aktiven Datenträger (und damit an das gesuchte Dokument) an. Dieser sich selbst optimierende Suchvorgang wird solange festgesetzt, bis das gesuchte Dokument gefunden worden ist.

Es versteht sich von selbst, daß die Erfindung nicht auf das geschilderte Ausführungsbeispiel beschränkt ist, sondern vielmehr auf weitere übertragbar ist.

So ist es z.B. möglich, das Suchgerät anstelle der Zeigeranzeige für die gemessene Empfangssignal-Feldstärke mit einer entsprechenden Digitalanzeige oder analogen "Balken"-Anzeige zu versehen. Alternativ oder in Ergänzung hierzu können auch optische bzw. akustische Anzeigen vorgesehen werden, deren Signalintensität (Licht- bzw. Lautstärke) in Abhängigkeit von dem gemessenen Empfangspegel zu- oder abnimmt.

Wesentliche Vorteile eines solchen Dokumenten-Suchsystems sind vor allem darin zu sehen,
- daß Dokumente "chaotisch", d.h. ohne Ordnung abgelegt und dennoch ohne große Mühe wieder aufgefunden werden können
- daß in der Erweiterung einer zusätzlichen Gruppenkennung und von auf diese Gruppenkennung ansprechenden Funkgeräten im Ein- und Ausgangsbereich von Räumen, in denen sich die derart gekennzeichneten Dokumente befinden, auf einfache Weise ein effektives Dokumenten-Diebstahlsystem realisiert werden kann (wichtig ist dies z.B. für öffentliche Bibliotheken oder Dokumentationszentren mit klassifiziertem Material)
- ferner ist mit entsprechenden Zusatzeinrichtungen eine belegbare Dokumentenausgabe z.B. in Verbindung mit schon vorhandenen computerlesbaren Ausweissystemen (Scheckkarten, Firmenausweise, Leserausweise usw.) möglich.

Ein ganz praktischer Vorteil ergibt sich z.B. bei einem Stelleninhaberwechsel; der Nachfolger, der in der Regel den Schriftverkehr seines Vorgängers nur unvollständig kennt (wenn überhaupt), sucht zunächst anhand der Datei in dem separaten Datenspeicher nach den ihn interessierenden Dokumenten und ortet anschließend mit Hilfe des Funkgeräts die zuvor ausgewählten Dokumente bzw. die entsprechenden Ordner seines Vorgängers, ohne in mühevoller Kleinarbeit eine Vielzahl von Ordnern durcharblättern zu müssen.

## Patentansprüche

1. Verfahren zur Standortbestimmung von abgelegten Gegenständen, gekennzeichnet durch folgende Merkmale:
a) vor ihrer Ablage werden die einzelnen Gegenstände mit einem elektronischen Datenträger versehen, in dem eine den jeweiligen Gegenstand individuell kennzeichnende Kennung abgespeichert ist;
b) in einem separaten Datenspeicher werden Informationen über die einzelnen abgelegten Gegenstände zusammen mit der jeweils zugehörigen Kennung abrufbar gespeichert;
c) zur Standortbestimmung eines der abgelegten Gegenstände wird dessen individuelle Kennung dem separaten Datenspeicher entnommen und mittels eines Funkgeräts als Suchsignal ausgesendet;
d) in den elektronischen Datenträgern, die mit dem Funkgerät in Wirkverbindung stehen, wird die von dem Funkgerät ausgesendete Kennung mit der in dem jeweiligen elektronischen Datenträger abgespeicherten Kennung verglichen;
e) nur derjenige elektronische Datenträger, bei dem die beiden Kennungen übereinstimmen, sendet auf die Suchsignale des Funkgeräts den Ort des gesuchten Gegenstandes anzeigende Antwortsignale aus.

2. Verfahren nach Anspruch 1, dadurch gekennzeichnet, daß als Suchsignale Mikrowellen- oder Millimeterwellen- oder Infrarotsignale ausgesendet werden.

3. Verfahren nach einem der Ansprüche 1 oder 2, dadurch gekennzeichnet, daß als Antwortsignale Mikrowellen- oder Millimeterwellen- oder Infrarotsignale und/oder optische Signale und/oder akustische Signale ausgesendet werden.

4. Verfahren nach einem der vorhergehenden Ansprüche, dadurch gekennzeichnet, daß die Frequenzen von Such- und Antwortsignalen verschieden sind.

5. Verfahren nach einem der vorhergehenden Ansprüche, dadurch gekennzeichnet, daß im Funkgerät der Signalpegel der empfangenen Antwortsignale gemessen und angezeigt wird.

6. Verfahren nach einem der vorhergehenden Ansprüche, dadurch gekennzeichnet, daß die Kennungen aller gekennzeichneten Gegenstände oder zumindest die Kennungen eines ausgewählten Teils dieser Gegenstände neben der jeweiligen individuellen Kennung eine für alle oder für alle ausgewählten Gegenstände gleiche Gruppenkennung aufweisen.

7. Verfahren nach Anspruch 6, dadurch gekennzeichnet, daß ausgewählte Funkgeräte nur die Gruppenkennung als Suchsignal aussenden und alle elektronischen Datenträger, in denen eine solche Gruppenkennung abgespeichert ist, Alarm- und/oder Antwortsignale aussenden, sobald sie in Wirkverbbindung mit diesen ausgewählten Funkgeräten stehen, und/oder die ausgewählten Funkgeräte Alarmsignale aussenden, nachdem sie Alarm- und/oder Antwortsignale der elektronischen Datenträger empfangen haben.

8. Anordnung zum Durchführen des Verfahrens nach einem der vorhergehenden Ansprüche, mit mindestens einem Funkgerät und mindestens einem elektronischen Datenträger, in dem eine Kennung abgespeichert ist und der an einem Gegenstand befestigt ist, dadurch gekennzeichnet, daß der elektronische Datenträger in Form eines Funketiketts, vorzugsweise in Form eines flexiblen und in eine selbstklebende Folie integrierten Funketiketts realisiert ist oder daß der elektronische Datenträger in eine Büro- oder Heftklammer integriert ist.

9. Anordnung nach Anspruch 8, dadurch gekennzeichnet, daß das Funkgerät als Funk-Sende/Empfangsgerät (1) ausgebildet ist und im Mikrowellen- oder Millimeterwellen- oder Infrarotbereich arbeitet.

10. Anordnung nach Anspruch 9, dadurch gekennzeichnet, daß das Funk-Sende/Empfangsgerät (1) einen Radarsensor (10), eine vorzugsweise alphanumerische Eingabetastatur (11), eine erste Anzeigeeinheit (12) zur Anzeige der über die Eingabetastatur (11) eingegebenen Kennung und eine zweite Anzeigeeinheit (13) zur Anzeige des gemessenen Empfangssignalpegels aufweist.

11. Anordnung nach Anspruch 10, dadurch gekennzeichnet, daß die erste Anzeigeeinheit (12) eine Digitalanzeigeeinheit ist, vorzugsweise in Form eines LCD-Displays, und/oder daß die zweite Anzeigeeinheit (13) eine vorzugsweise mit einem Zeiger ausgerüstete Analoganzeigeeinheit ist.

12. Verfahren bzw. Anordnung nach einem der vorhergehenden Ansprüche, gekennzeichnet durch die Verwendung als Dokumenten-Suchsystems in geschlossenen Räumen, insbesondere für Sekretariate, Bibliotheken, Archive und Dokumentatationszentren.

13. Verfahren bzw. Anordnung nach Anspruch 12, gekennzeichnet durch die ergänzende Installation von Überwachungs-Funkgeräten an den Ein- und Ausgängen der geschlossenen Räume, die permanent nur die Gruppenkennung aussenden, und durch die Aussendung von Alarmsignalen seitens der Überwachungs-Funkgeräte und/oder der mit ihnen in Wirkverbindung stehenden elektronischen Datenträger, sobald die Wirkverbindung hergestellt ist.
